Europäisches Patentamt

European Patent Office

Office européen des brevets

(11) Veröffentlichungsnummer: **0 509 235 A1**

# EUROPÄISCHE PATENTANMELDUNG

(21) Anmeldenummer: **92104198.4**

(22) Anmeldetag: **11.03.92**

(51) Int. Cl.5: **B65G 47/248**, B65G 11/20

(30) Priorität: **17.04.91 DE 4112573**

(43) Veröffentlichungstag der Anmeldung:
**21.10.92 Patentblatt 92/43**

(84) Benannte Vertragsstaaten:
**CH DE FR GB IT LI**

(71) Anmelder: **PILZ TECHNOLOGIE GmbH**
**Ingrid-Pilz-Strasse 1**
**W-8051 Kranzberg(DE)**

(72) Erfinder: **Pilz, Reiner**
**Hohenbachern Strasse 34**
**W-8051 Kranzberg(DE)**

(74) Vertreter: **Glawe, Delfs, Moll & Partner**
**Patentanwälte**
**Postfach 26 01 62 Liebherrstrasse 20**
**W-8000 München 26(DE)**

(54) Übergabevorrichtung für aus einer Spritzgiessmaschine ausgeformte, scheibenförmige Werkstücke.

(57) Übergabevorrichtung für aus einer Spritzgießmaschine ausgeformte CD-Plattenrohlinge oder Scheiben mit einer geneigten Führung (1), in der die Scheiben (2) in aufrechter Position durch ihr Gewicht zu einem Abgabeende (3) der Führung (1) rollen können, einer Transportvorrichtung (6) für den Weitertransport der Scheiben in horizontalliegender Position, die jeweils einen horizontalen Aufnahmeteller (7) aufweist, der in eine Aufnahmeposition seitlich neben dem Abgabeende (3) der Führung bewegbar ist, wobei die Führung (1) im Bereich ihres Abgabeendes (3) die Scheibe in einer gegenüber der Vertikalebene geringfügig zur Abgabeseite hin geneigten Stellung führt und die Führung am Abgabeende (3) die Scheibe (2) auf der Abgabeseite nicht abstützt, so daß die Scheibe bei Erreichen des Abgabeendes (3) durch ihr Eigengewicht um ihren unteren Auflagerpunkt in die Horizontallage auf dem Aufnahmeteller (7) umkippt.

FIG.1

EP 0 509 235 A1

Rank Xerox (UK) Business Services

Die Erfindung betrifft eine Übergabevorrichtung für aus einer Spritzgießmaschine ausgeformte, scheibenförmige Werkstücke, insbesondere CD-Plattenrohlinge, mit einer geneigten Führung, in der die Scheiben in aufrechter Position durch ihr Gewicht zu einem Abgabeende der Führung rollen können, einer Transportvorrichtung für den Weitertransport der Scheiben in horizontalliegender Position, die jeweils einen horizontalen Aufnahmeteller aufweist, der in eine Aufnahmeposition seitlich neben dem Abgabeende der Führung bewegbar ist, und mit Mitteln zum Überführen der Scheibe aus der aufrechten Position in der Führung in die Horizontallage auf dem Aufnahmeteller.

Derartige Vorrichtungen zum Übergeben der in einer Spritzgießmaschine geformten CD-Plattenrohlinge von einer geneigten Führung oder Rutsche auf einen Aufnahmeteller, der die Rohlinge zur weiteren Behandlung z.B. in einer Bedampfungs- oder Beschichtungsanlage transportiert, sind bekannt. Die Überführung der Rohlinge aus der Führung in die auf dem Aufnahmeteller horizontalliegende Position erfolgt dabei durch einen um eine horizontale Achse schwenkbaren Greifer, der den in der Führung vertikal gehaltenen CD-Plattenrohling an seinem Umfang und/oder an seiner Zentrieröffnung erfaßt und nach Schwenkung um 90° horizontal auf dem Aufnahmeteller ablegt. Dieser Greifer ist nicht nur mechanisch kompliziert und konstruktiv aufwendig, sondern benötigt für das Umsetzen der Rohlinge aus der aufrechten Position in die horizontalliegende Position auch eine unerwünscht große Zeitspanne. Diese resultiert nicht nur aus der für den eigentlichen Greif- und Umsetzvorgang erforderlichen Zeit, sondern auch aus den unvermeidlichen Zeittoleranzen, die zur Abstimmung des Greifertaktes auf die Arbeitstakte der Spritzgießmaschine und der Transportvorrichtung vorgesehen werden müssen. Hieraus ergeben sich Verzögerungen des gesamten Arbeitstaktes, die für den Herstellprozeß von Massenprodukten wie CD-Platten sehr unerwünscht sind.

Aufgabe der vorliegenden Erfindung ist es, eine Übergabevorrichtung der eingangs beschriebenen Art zu schaffen, bei der die Übergabe der Rohlinge zwischen geneigter Führung und horizontalem Aufnahmeteller schneller und einfacher als bei den bekannten Vorrichtungen erfolgen kann.

Diese Aufgabe wird erfindungsgemäß gelöst durch eine Übergabevorrichtung der eingangs beschriebenen Art die durch die Merkmale des Patentanspruches 1 gekennzeichnet ist.

Bei der erfindungsgemäßen Einrichtung erfolgt das Übergeben der Scheibe am Abgabeende der Führung auf den Aufnahmeteller nicht durch zwangsgesteuertes Umsetzen, sondern durch ein Umkippen der Scheibe im "freien Fall". Damit kann dieser Arbeitsschritt mit einem Minimum an Zeit und konstruktivem Aufwand durchgeführt werden, und zwar - überraschenderweise - ohne daß durch den freien Fall der Scheibe die Positions- und Taktpräzision des Übergabevorgangs beeinträchtigt wird oder der im preßfrischen Zustand sehr empfindliche CD-Plattenrohling beschädigt wird.

Um sicherzustellen, daß die Scheibe beim Kippen korrekt auf einen bereitstehenden Aufnahmeteller trifft, kann an der Führung vor ihrem Abgabeende ein beweglicher und steuerbarer Stopper vorgesehen sein, der die Scheibe anhält und damit ihre kinetische Energie vernichtet und im Abstand zum Führungsende die durch den Restbewegungsablauf neu entstehende Energie dosiert. auf den Aufnahmeteller gelangen. Hierdurch wird gewährleistet, daß die Spritzgießmaschine bei kurzfristigen Unterbrechungen des nachfolgenden Fertigungsbereiches weiterproduzieren kann, wobei die während dieser Betriebsstörung produzierten Rohlinge als Ausschuß behandelt werden.

Eine Ausführungsform der vorliegenden Erfindung wird anhand der folgenden Figuren im einzelnen beschrieben. Es zeigt:

Fig. 1      die erfindungsgemäße Übergabeeinrichtung in schematischer Seitenansicht;

Fig. 2      die Übergabeposition zwischen Abgabeende der Führung und Aufnahmeteller in schematischer Darstellung teilweise im Schnitt mit strichpunktiert dargestelltem Fallweg der Scheibe; und

Fig. 3 und 4      jeweils einen Schnitt durch die Führung gemäß Fig. 1 entlang der Schnittlinie III-III bzw. IV-IV.

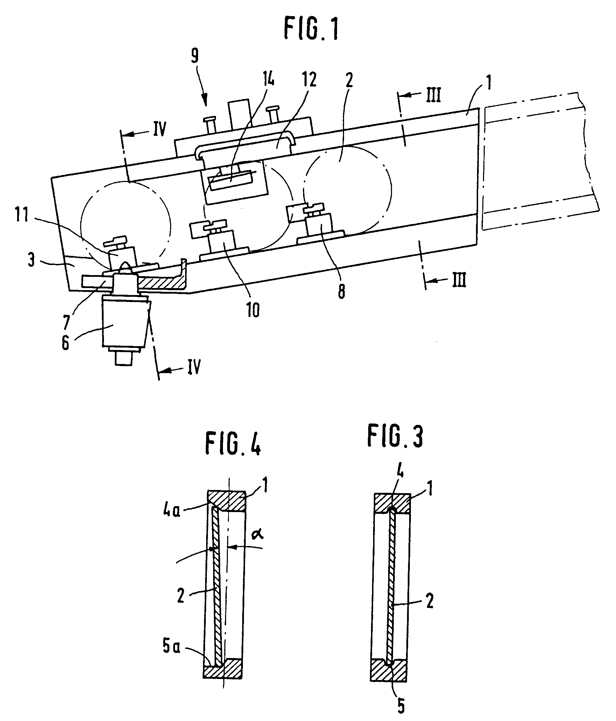

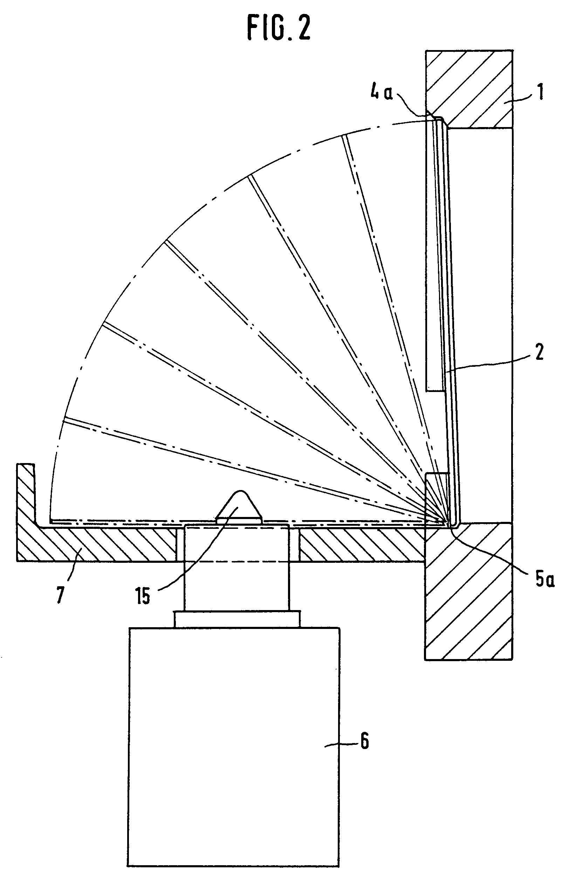

Die in der Fig. 1 dargestellte Übergabeeinrichtung besteht aus einer geneigten Führung 1, in der die in einer nichtdargestellten Spritzgießmaschine geformten CD-Plattenrohlinge oder Scheiben 2 in aufrechter Position infolge ihres Eigengewichtes zu einem Abgabeende 3 rollen können. Wie aus der Fig. 3 zu ersehen ist, werden die Scheiben in Die in der Fig. 1 dargestellte Übergabeeinrichtung besteht aus einer geneigten Führung 1, in der die in einer nichtdargestellten Spritzgießmaschine geformten CD-Plattenrohlinge oder Scheiben 2 in aufrechter Position infolge ihres Eigengewichtes zu einem Abgabeende 3 rollen können. Wie aus der Fig. 3 zu ersehen ist, werden die Scheiben in der Führung 1 in Nuten 4 und 5 an der Innenfläche der Führung in ihrer aufrechten Position gehalten. Seitlich neben dem Abgabeende 3 der Führung 1 befindet sich eine Transportvorrichtung 6 mit mindestens einem horizontalen Aufnahmeteller 7 zum Aufnehmen und Weitertransportieren der Scheiben zu einer nichtdargestellten Beschichtungseinrichtung oder dgl. Im Bereich des Abgabeendes 3 hat die Führung 1 ein in der Fig. 4 gezeigtes Profil, wobei die obere Nut 4 allmählich gegenüber der Mittelebene zur Abgabeseite der Scheiben hin versetzt wird und in der gezeigten offenen Schräge 4a endet. Die untere Nut 5 bleibt in der Mitte, ist jedoch an der Abgabeposition zur Abgabeseite hin offen. Durch diesen Verlauf der Führungsnuten 4, 4a und 5, 5a wird die Scheibe 2 bei Annäherung an das Abgabeende um den Winkel α gekippt und kann dann an der Position der offenen Schräge 4a und des offenen Absatzes 5a aufgrund ihres Eigengewichtes zur Seite kippen, wie dies in der Fig. 2 dargestellt ist. Der Absatz 5a bildet dabei einen unteren Auflagepunkt, um den die Scheibe 2 sich dreht und fällt. Da der Aufnahmeteller 7 seitlich neben dem Abgabeende 3 der Führung 1 liegt, gelangt so die Scheibe 2 einfach und schnell von der aufrechten Position in der Führung 1 in die horizontale Lage auf dem Aufnahmeteller 7, wo sie durch Eingriff eines kegelförmigen Zentrierdorns (15) in ihr Mittelloch zentriert wird.

Um sicherzustellen, daß die jeweilige Scheibe 2 auf einen der Aufnahmeteller 7, die von der Transporteinrichtung 6 am Abgabeende der Führung 1 vorbeigeführt werden, trifft, ist an der Führung 1 im Bereich des Abgabeendes 3 ein beweglicher Stopper 11 angeordnet. Dieser Stopper 11 stoppt jede anrollende Scheibe 2 und gibt sie zeitlich abgestimmt für das Weiterrollen frei, wenn der Aufnahmeteller 7 sich in oder kurz vor der Aufnahmeposition befindet. Der Stopper 11 ist so nahe am Abgabeende angeordnet, daß die von ihm freigegebene Scheibe nur mit geringer Geschwindigkeit am Abgabeende ankommt. Dadurch wird verhindert, daß die Kippbewegung der Scheibe durch einen zu großen Bewegungsimpuls der Scheibe in Längsrichtung der Führung oder durch Rückprall der Scheibe am Führungsende störend beeinflußt wird.

Weitere Stopper 8, 10 können vor dem Abgabeende der Führung angeordnet sein. Ferner kann in der Führung 1 eine Auswerfeinrichtung 9 vorgesehen sein. Diese umfaßt ein bewegliches Wandstück 12 der Begrenzungswand der oberen Führungsnut 4, einen beweglichen Auswerfer 14 und den Stopper 10. Die Auswerfeinrichtung 9 wird betätigt, wenn in der gesamten Fertigungsanlage eine Störung eintritt und/oder wenn festgestellt wird, daß fehlerhafte CD-Plattenrohlinge von der Spritzgießmaschine produziert werden. Dabei wird durch Heben des Wandstücks 12 die obere Führungsnut 4 soweit bewegt, daß die Scheibe 2 oben nicht mehr geführt ist, zugleich mit dem Heben des Wandstücks 12 schwenkt zwangsweise der Auswerfer 14 in den Weg der nicht mehr geführten Scheibe 2 und sichert ab, daß die Scheibe 2 seitlich aus der Führung ausgeworfen wird, oder bei längeren Störungen seitlich ausläuft. Der Stopper 10 hat vorher sichergestellt, daß die Scheibe in der richtigen Position angehalten wurde. Dadurch, daß der Stopper 10 elektronisch gesteuert wird, kann sichergestellt werden, daß der Zeitpunkt der Entscheidung des Auswerfens ablauforientiert bestimmt werden kann. Hierdurch wird vermieden, daß bei jeder auftretenden Störung die Spritzgießmaschine stillgesetzt werden muß.

## Patentansprüche

1. Übergabevorrichtung für aus einer Spritzgießmaschine ausgeformte scheibenförmige Werkstücke, insbesondere CD-Plattenrohlinge, mit einer geneigten Führung, in der die Scheiben in aufrechter Position durch ihr Gewicht zu einem Abgabeende der Führung rollen können, einer Transportvorrichtung für den Weitertransport der Scheiben in horizontalliegender Position, die jeweils einen horizontalen Aufnahmeteller aufweist, der in eine Aufnahmeposition seitlich neben dem Abgabeende der Führung bewegar ist, und mit Mitteln zum Überführen der Scheibe aus der aufrechten Position in der Führung in die Horizontallage auf dem Aufnahmeteller, dadurch **gekennzeichnet,** daß die Führung (1) im Bereich ihres Abgabeendes (3) die Scheibe (2) in einer gegenüber der Vertikalebene geringfügig zur Abgabeseite hin geneigten Stellung führt, und daß die Führung (1) am Abgabeende (3) die Scheibe (2) auf der Abgabeseite nicht abstützt, so daß die Scheibe (2) bei Erreichen des Abgabeendes durch ihr Eigengewicht um ihren unteren Auflagerpunkt in die Horizontallage auf dem Aufnahmeteller (7) umkippt.

2. Übergabevorrichtung nach Anspruch 1, dadurch **gekennzeichnet,** daß vor dem Abgabeende der Führung mindestens ein beweglicher Stopper (11) angeordnet ist, der die Scheiben (2) vor Erreichen des Abgabeendes (3) der Führung (1) anhalten und gesteuert freigeben kann.

3. Übergabevorrichtung nach Anspruch 2, dadurch **gekennzeichnet,** daß der Stopper (11) in Abhängigkeit von der Bewegung des Aufnahmetellers (7) derart steuerbar ist, daß er die Scheibe (2) für das Weiterrollen zum Abgabeende (3) freigibt, wenn oder kurz bevor sich der Aufnahmeteller (7) in der Aufnahmeposition befindet.

4. Übergabevorrichtung nach Anspruch 1, dadurch **gekennzeichnet,** daß vor dem Abgabeende (3) der Führung (1) steuerbare Mittel (12) zum Freigeben der Scheibe auf der Abgabeseite und ein Auswerfer (14) zum seitlichen Auswerfen der Scheibe (2) aus der Führung (1) vorgesehen sind.

# FIG.1

# FIG.4

# FIG.3

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | CH-A-296 742 (L.SCHULER AG)<br>* Seite 3, Zeile 42 - Zeile 80; Abbildungen 1,4-6 *<br>--- | 1-3 | B65G47/248<br>B65G11/20 |
| Y | GB-A-819 950 (LEADING ENGINEERING)<br>* Seite 2, Zeile 114 - Seite 3, Zeile 8; Abbildungen 6-8 *<br><br>----- | 1-3 | |

RECHERCHIERTE
SACHGEBIETE (Int. Cl.5 )

B65G
B23Q
B21D

**Der vorliegende Recherchenbericht wurde für alle Patentansprüche erstellt**

| Recherchenort | Abschlußdatum der Recherche | Prüfer |
|---|---|---|
| DEN HAAG | 15 JULI 1992 | NEVILLE D.J. |

**KATEGORIE DER GENANNTEN DOKUMENTE**

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
   Dokument

EPO FORM 1503 03.82 (P0403)